# EUROPEAN PATENT APPLICATION

(11) **EP 4 726 829 A1**
(43) Date of publication of application: **15.04.2026**
(21) Application number: 25206465.4
(22) Date of filing: 02.10.2025
(51) Int. Cl.: H01M 10/04, H01M 50/103, H01M 50/107, H01M 50/121, H01M 50/124, H01M 50/119

(54) **RECHARGEABLE BATTERY AND BATTERY PACK INCLUDING THE SAME**

(30) Priority: 10.10.2024 KR 20240137991; 01.10.2025 KR 20250143238
(71) Applicant: Samsung SDI Co., Ltd., Yongin-si, Gyeonggi-do 17084 (KR)
(72) Inventor: KIM, Jin Doo, Suwon-si, 16678 (KR)
(74) Representative: Marks & Clerk LLP

(57) **Abstract**

A rechargeable battery includes a case, an electrode assembly in the case, a plurality of protrusions on an inner surface of the case, and a resin between an outer surface of the electrode assembly and the plurality of protrusions, the resin having a melting point of 150 °C or higher.

## Description

### BACKGROUND

### 1. Field

Aspects of embodiments of the present disclosure relate to a rechargeable battery and a battery pack including the same.

### 2. Description of the Related Art

Recently, with the rapid spread of electronic devices that use batteries, such as cellular phones, laptop computers and electric vehicles, the demand for rechargeable batteries with high energy density and high capacity is rapidly increasing. Accordingly, research and development to improve the performance of lithium rechargeable batteries is actively underway.

A lithium rechargeable battery is a battery including a positive electrode and a negative electrode, which contain active materials capable of intercalation and deintercalation of lithium ions, and an electrolyte. The lithium rechargeable battery generates electrical energy through oxidation and reduction reactions when lithium ions are intercalated/deintercalated into/from the positive electrode and the negative electrode.

The above information disclosed in this Background section is for enhancement of understanding of the background of the present disclosure, and therefore, it may contain information that does not constitute related (or prior) art.

### SUMMARY

Aspects of embodiments provide a rechargeable battery, including a case; and an electrode assembly disposed in the case, wherein a plurality of protrusions are formed on an inner surface of the case, and a resin with a melting point of 150 °C or higher is included on an outer surface of the electrode assembly or between the plurality of protrusions.

The resin may have a melting point of 150 °C to 200 °C.

The resin may be a thermoplastic resin.

The resin may include one or more of a polyethylene resin, a polypropylene resin, and a polyurethane resin.

The resin may be on the outer surface of the electrode assembly and facing the protrusions.

The resin may be a coating layer on the outer surface of the electrode assembly.

The coating layer may be on 50% to 100% of a total area of the outer surface of the electrode assembly facing the inner surface of the case including the protrusions.

A ratio of a maximum height of each of the protrusions to a thickness of the coating layer may be 1:0.2 to 1:2.

The thickness of the coating layer may be 1 µm to 10 µm, and the maximum height of each of the protrusions may be 1 µm to 10 µm.

A maximum height of each of the protrusions may be 50% or more of a gap between the inner surface of the case and the coating layer.

The coating layer may be a continuous single layer on the outer surface of the electrode assembly.

The coating layer may include a first region with the resin and a second region without the resin, the first region and the second region alternating on the outer surface of the electrode assembly.

The protrusions may be on the inner surface of the case to face only the second region.

The coating layer may be in contact with the protrusions.

The coating layer may be flat.

The resin coating layer may have an uneven surface with convex portions, the protrusions corresponding to concave portions between the convex portions.

Each of the protrusions may have a pointed top.

An aspect ratio of each of the protrusions may be 0.1 to 3.

A distance between the protrusions may be 0 µm to 10 µm.

Aspects of embodiments provide a battery pack, including a housing; and a plurality of rechargeable batteries disposed in the housing, wherein each rechargeable battery includes a case; and an electrode assembly disposed in the case, a plurality of protrusions are formed on an inner surface of the case, and a resin with a melting point of 150 °C or higher is included on an outer surface of the electrode assembly or between the plurality of protrusions.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 is an exploded perspective view schematically illustrating a battery pack according to an embodiment of the present disclosure;
FIG. 2 is a perspective view schematically illustrating a rechargeable battery according to an embodiment of the present disclosure;
FIG. 3 is a cross-sectional view schematically illustrating a rechargeable battery according to an embodiment of the present disclosure;
FIG. 4 is an enlarged cross-sectional view showing the electrode assembly and case of a rechargeable battery according to an embodiment of the present disclosure;
FIG. 5 is an enlarged cross-sectional view showing the electrode assembly and case of a rechargeable battery according to another embodiment of the present disclosure;
FIG. 6 is an enlarged cross-sectional view showing the electrode assembly and case of a rechargeable battery according to still another embodiment of the present disclosure;
FIG. 7 is an enlarged cross-sectional view showing the electrode assembly and case of a rechargeable battery according to yet another embodiment of the present disclosure;
FIG. 8 is an enlarged cross-sectional view showing the electrode assembly and case of a rechargeable battery according to yet another embodiment of the present disclosure;
FIG. 9 is an enlarged cross-sectional view showing the electrode assembly and case of a rechargeable battery according to yet another embodiment of the present disclosure;
FIG. 10 is a partial plan view showing the inner surface of the first side of the case of a rechargeable battery according to yet another embodiment of the present disclosure; and
FIG. 11 is an enlarged cross-sectional view showing the electrode assembly and case of a rechargeable battery according to yet another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It will further be understood that when an element or layer is referred to as being ""linked to," "connected to," or "coupled to" another element or layer, it may be directly linked, connected, or coupled to the other element or layer or one or more intervening elements or layers may also be present. When an element or layer is referred to as being "directly linked to," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

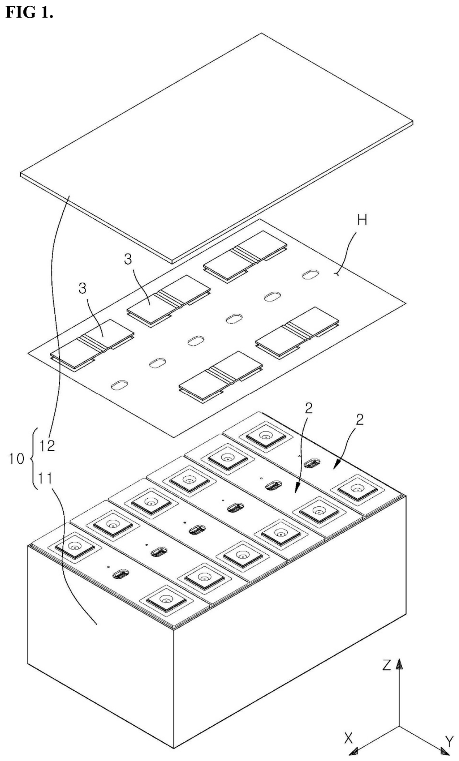

FIG. 1 is an exploded perspective view schematically illustrating the configuration of a battery pack according to an embodiment of the present disclosure.

Referring to FIG. 1, the battery pack according to various embodiments may include a housing 10, rechargeable batteries 2, and busbars 3. The housing 10 may form the general outer shape of the battery pack and provide a space for accommodating the rechargeable batteries 2. The housing 10 according to the present embodiment may include a housing body 11 and a cover 12.

The housing body 11 may be formed as a box with one side open and an empty interior. The cross-sectional shape of the housing body 11 may be designed in various shapes, e.g., polygonal, circular and oval shapes.

The cover 12 may be coupled to the housing body 11 and may seal the empty interior, e.g., the internal space, of the housing body 11. For example, the cover 12 may have a plate-like shape and may be positioned to face the open side of the housing body 11. The cover 12 may be fixed to the housing body 11 by various joining methods such as bolting, welding, and fitting.

The rechargeable battery 2 may serve as a unit structure that stores and supplies power in the battery pack. Hereinafter, the rechargeable battery 2 according to various embodiments of the present disclosure will be described.

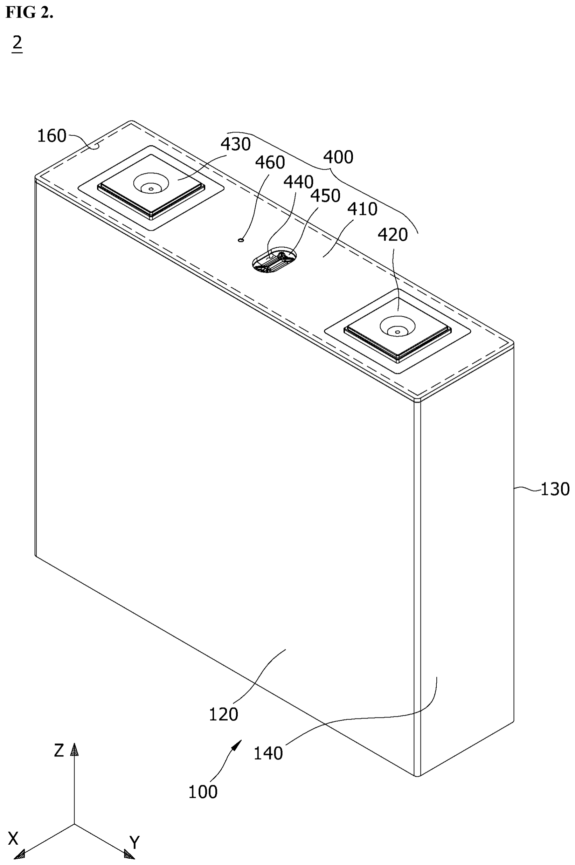

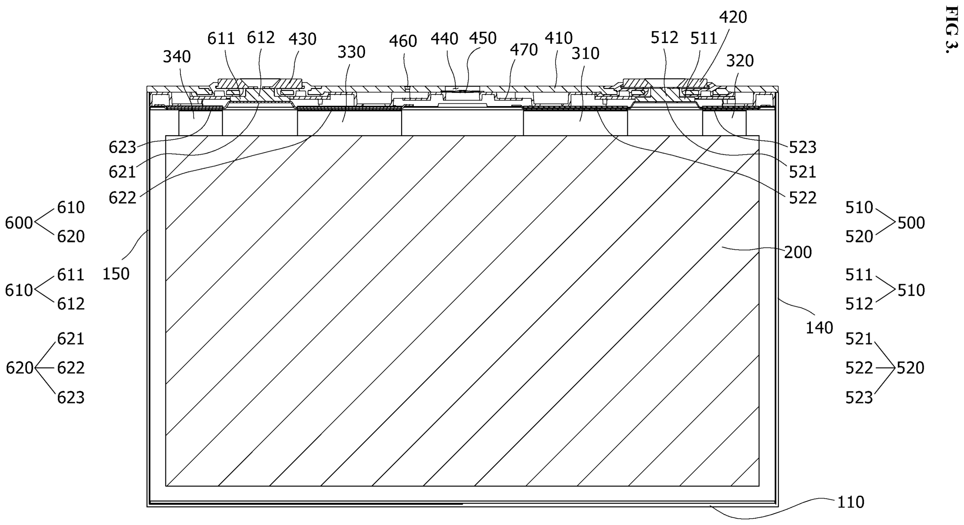

FIG. 2 is a perspective view schematically illustrating the configuration of a rechargeable battery according to an embodiment of the present disclosure, and FIG. 3 is a cross-sectional view schematically illustrating the configuration of a rechargeable battery according to an embodiment of the present disclosure.

Hereinafter, the rechargeable battery will be described as a prismatic lithium-ion rechargeable battery. However, the rechargeable battery may be, e.g., a lithium polymer battery or a cylindrical battery.

Referring to FIGS. 2 and 3, the rechargeable battery 2 according to the present embodiment may include a case 100, an electrode assembly 200, a first tab member, a cap assembly 400, and a first connecting member 500.

The case 100 may form the general outer shape of the rechargeable battery 2 and accommodate the electrode assembly 200. The case 100 according to the present embodiment may include a bottom 110, a front 120, a rear 130, a first side 140, and a second side 150.

The bottom 110 may form the outer shape of the lower side of the case 100 (based on FIG. 3). The bottom 110 according to the present embodiment may have a rectangular plate shape. The bottom 110 may be seated on the bottom surface of the housing body 11.

The front 120, the rear 130, the first side 140, and the second side 150 may form the outer perimeter of the case 100. The front 120, the rear 130, the first side 140, and the second side 150 according to the present embodiment may each have a plate shape that extends upward from the edges of the bottom 110 (based on FIG. 3). The front 120, the rear 130, the first side 140, and the second side 150 may be disposed to surround the space above the bottom 110. The front 120, the rear 130, the first side 140, and the second side 150 may be disposed to have a rectangular cross-sectional shape.

The front 120 and the rear 130 may be disposed to face each other along a longitudinal direction of the housing 10. The front 120 and the rear 130 may be disposed parallel to each other. The areas of the front 120 and the rear 130 may be the same.

The first side 140 and the second side 150 may be disposed to face each other along a width direction of the housing 10. The first side 140 and the second side 150 may be disposed parallel to each other. The areas of the first side 140 and the second side 150 may be the same. The area of each of the first side 140 and the second side 150 may be smaller than the area of each of the front 120 and the rear 130.

The case 100 may further include an opening 160. The opening 160 according to the present embodiment may refer to a space surrounded by the upper parts of the front 120, the rear 130, the first side 140, and the second side 150. The opening 160 may interconnect the space inside and outside the case 100. Accordingly, the case 100 according to the present embodiment may have a rectangular parallelepiped shape with an open top.

The first direction described below may refer to a direction parallel to the Z-axis based on FIG. 3 and a direction from the bottom 110 toward the opening 160. The second direction may refer to a direction parallel to the Y-axis based on FIG. 3 and a direction from the first side 140 toward the second side 150. The third direction may refer to a direction parallel to the X-axis based on FIG. 3 and a direction from the front 120 toward the rear 130.

The electrode assembly 200 may serve as a unit structure that performs the charging and discharging of power in the rechargeable battery. The electrode assembly 200 may be accommodated in the case 100.

Referring to FIGS. 2 and 3, the electrode assembly 200 according to the present embodiment may include a first electrode, a second electrode, and a separator disposed between the first electrode and the second electrode. A plurality of first electrodes, separators, and second electrodes may be provided.

Hereinafter, the electrode assembly 200 in which a plurality of first electrodes, separators, and second electrodes are sequentially stacked along the third direction will be described as an example. However, the electrode assembly 200 may be formed in a form in which the first electrode, the separator, and the second electrode are stacked and wound clockwise or counterclockwise around a winding axis.

The first electrode may serve as either the positive electrode or negative electrode of the electrode assembly 200. Hereinafter, an example in which the first electrode serves as the positive electrode of the electrode assembly 200 will be described. However, the first electrode may serve as the negative electrode of the electrode assembly 200.

The first electrode according to the present embodiment may be formed to have a form of a foil including a metal material such as aluminium or an aluminium alloy. Any suitable type, size, and shape of the first electrode may be implemented, as long as it is conductive and does not cause a chemical change in the rechargeable battery. The cross-sectional shape of the first electrode may be designed to have various shapes other than a rectangle.

The first electrode may be provided in multiple pieces. The multiple first electrodes may be arranged along the third direction between the front 120 and the rear 130 of the case 100. The number of first electrodes may be designed in various ways depending on the charging capacity of the rechargeable battery 2, etc.

A first active material layer may be applied to at least a portion of the first electrode. The first active material layer may be applied to both surfaces of the first electrode, or alternatively, may be applied to only one surface of the first electrode.

Since the first electrode functions as a positive electrode in this embodiment, the first active material layer may include a positive electrode active material. As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese-oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2-α}D'_{α} (0.90≤a≤1.8, 0≤b≤0.5, 0≤c≤0.5, 0<α<2); LiₐNi_{1-b-c}Mn_{b}X_{c}O_{2-α}D'_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and L¹ may be Mn, Al, or a combination thereof.

The first active material layer may further include a positive electrode conductive material. The positive electrode conductive material is used to provide conductivity to the first active material layer, and any material that does not cause a chemical change and is electrically conductive can be used. Examples of the positive electrode conductive material include carbon materials such as natural graphite, artificial graphite, carbon black, acetylene black, Ketjen black, carbon fibers, carbon nanofibers, and carbon nanotubes; metal materials in the form of metal powder or metal fibers containing copper, nickel, aluminium, and silver; conductive polymers such as polyphenylene derivatives; or mixtures thereof.

The first active material layer may further include a positive electrode binder. The positive electrode binder serves to attach the particles constituting the positive electrode active material to each other well, and also to attach the positive electrode active material to the first electrode well.

Examples of the positive electrode binder include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the positive electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The first electrode may include a first bare portion to which the first active material layer is not applied. The first bare portion according to the present embodiment may be arranged in an upper portion region of the first electrode, which is arranged to face the opening 160 inside the case 100. However, the first bare portion may be formed over the entire edge region of the first electrode.

The second electrode may serve as either the positive electrode or negative electrode of the electrode assembly 200. Hereinafter, an example in which the second electrode serves as the negative electrode of the electrode assembly 200 will be described. However, the second electrode may serve as the positive electrode of the electrode assembly 200.

The second electrode may be provided in multiple numbers. The multiple second electrodes may be arranged along the third direction between the front 120 and the rear 130 of the case 100. The first electrode and the second electrode may be arranged alternately along the third direction. The second electrode may be spaced apart from the first electrode by a predetermined distance along the third direction.

The second electrode according to the present embodiment may be formed to have a form of a foil including a metal material such as copper, a copper alloy, nickel, or a nickel alloy. Any suitable type, size, and shape of the second electrode may be implemented, as long as it is conductive and does not cause a chemical change in the rechargeable battery. The cross-sectional shape of the first electrode may be designed to have various shapes other than a rectangle.

A second active material layer may be applied to at least a portion of the second electrode. The second active material layer may be applied to both surfaces of the second electrode, or alternatively, may be applied to only one surface of the second electrode.

Since the second electrode functions as a negative electrode, the second active material layer may include a negative electrode active material. The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si negative electrode active material or a Sn negative electrode active material. The Si negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn negative electrode active material may include Sn, SnO₂, a Sn alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si negative electrode active material or the Sn negative electrode active material may be used in combination with a carbon negative electrode active material.

The second active material layer may further include a negative conductive material and a negative electrode binder.

The negative electrode conductive material is used to provide conductivity to the first active material layer, and any material that does not cause a chemical change and is electrically conductive can be used. Examples of the negative electrode conductive material include carbon materials such as natural graphite, artificial graphite, carbon black, acetylene black, Ketjen black, carbon fibers, carbon nanofibers, and carbon nanotubes; metal materials in the form of metal powder or metal fibers containing copper, nickel, aluminium, and silver; conductive polymers such as polyphenylene derivatives; or mixtures thereof.

The negative electrode binder serves to attach the particles constituting the negative electrode active material to each other well, and also to attach the negative electrode active material to the second electrode well. Examples of the negative electrode binder include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose compound capable of imparting viscosity may be further included. The cellulose compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The second electrode may include a second bare portion to which the second active material layer is not applied. The second bare portion according to the present embodiment may be arranged in an upper portion region of the second electrode, which is arranged to face the opening 160 inside the case 100. However, the second bare portion may be formed over the entire edge region of the second electrode.

The separator may be placed between the first electrode and the second electrode. The separator may perform a function of preventing a short circuit between the first electrode and the second electrode while allowing the movement of lithium ions between the first electrode and the second electrode.

The separator may be placed so as to completely cover the surface area of the electrode assembly 200. Accordingly, the separator may prevent the first electrode and the second electrode from being directly exposed to the outside of the electrode assembly 200.

As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator may be used.

The separator may include a porous substrate and a coating layer including an organic material, an inorganic material, or a combination thereof on one or both surfaces of the porous substrate.

The above porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, polytetrafluoroethylene (e.g., Teflon), or a copolymer or mixture of two or more thereof.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic material and the inorganic material may be mixed in one coating layer or may be in the form of a coating layer containing an organic material and a coating layer containing an inorganic material that are laminated on each other.

The first tab member according to the present embodiment may extend from the electrode assembly 200 in the first direction. The first tab member according to the present embodiment may include a first inner tab member 310 and a first outer tab member 320. The first inner tab member 310 and the first outer tab member 320 may be spaced apart from each other in the second direction. For example, the first outer tab member 320 and the first inner tab member 310 may be sequentially arranged in the second direction.

The rechargeable battery 2 according to the present embodiment may further include a second tab member. The second tab member may include a second inner tab member 330 and a second outer tab member 340. The second inner tab member 330 and the second outer tab member 340 may be spaced apart along the second direction. For example, the second inner tab member 330 and the second outer tab member 340 may be sequentially arranged along the second direction.

The cap assembly 400 may be coupled to the case 100 and may seal the case 100. The cap assembly 400 may be arranged to face the electrode assembly 200 along the first direction.

The cap assembly 400 according to the present embodiment may include a cap plate 410, a first terminal 420, and a second terminal 430. The cap plate 410 forms a general appearance of the cap assembly 400 and may support the first terminal 420 and the second terminal 430 as a whole.

The first terminal 420 may protrude outwardly from the cap plate 410. The first terminal 420 may be electrically connected to the first electrode. Since the first electrode according to the present embodiment functions as a positive electrode, the first terminal 420 may be exemplified as a positive terminal of the rechargeable battery 2.

The second terminal 430 may protrude outwardly from the cap plate 410 at a position spaced apart from the first terminal 420. The second terminal 430 may be electrically connected to the second electrode. Since the second electrode according to the present embodiment functions as a negative electrode, the second terminal 430 may be exemplified as a negative terminal of the rechargeable battery 2.

The cap assembly 400 according to the present embodiment may further include a vent hole 440, a vent 450, an electrolyte injection port 460, and an insulating plate 470.

The rechargeable battery according to the present embodiment may further include a first connecting member 500 and a second connecting member 600.

The first connecting member 500 may be arranged between the electrode assembly 200 and the cap assembly 400. The first connecting member 500 may be connected to the first terminal 420 and the first tab member. The first connecting member 500 may function as a component that electrically connects the first terminal 420 and the first tab member. The first connecting member 500 may be formed of a material that is electrically conductive. The first connecting member 500 according to the present embodiment may include a first collector 510 and a first current collector plate 520.

The first collector 510 may be connected to the first terminal 420. The first collector 510 according to the present embodiment may include a first body 511 and a first boss 512.

The first body 511 may form one side of the outer surface of the first collector 510 and may support the first boss 512. The first body 511 according to the present embodiment may be arranged between the electrode assembly 200 and the first terminal 420. The first body 511 may be spaced apart from the lower surface of the first terminal 420 by a predetermined distance in the first direction. The first boss 512 may extend from the first body 511 and may be connected to the first terminal 420.

The first current collector plate 520 can be fixed to the first collector 510 and connected to the first tab member. The first current collector plate 520 according to the present embodiment may include a first center plate 521, a first inner plate 522, and a first outer plate 523.

The first center plate 521 forms the central outer surface of the first current collector plate 520 and may be connected to the first collector 510. The first center plate 521 according to the present embodiment may be placed between the first body 511 and the electrode assembly 200. The first center plate 521 may be in contact with the lower surface of the first body 511 located on the opposite side of the first boss 512. The first center plate 521 may be fixed to the lower surface of the first body 511 by various types of joining methods such as welding, bolting, and adhesion.

The first center plate 521 may have both ends extend from the first body 511 toward the electrode assembly 200. The first center plate 521 may have both ends penetrate the insulating plate 470 and may be arranged on the lower side of the insulating plate 470.

The first inner plate 522 may extend from the first collector 510 in the second direction. The first inner plate 522 according to the present embodiment may extend from one end of the first center plate 521 in the second direction. The first inner plate 522 may be arranged to face the first inner tab member 310 in the first direction. The first inner plate 522 may be in contact with the end surface of the first inner tab member 310.

The second connecting member 600 may be arranged between the electrode assembly 200 and the cap assembly 400. The second connecting member 600 may be connected to the second terminal 430 and the second tab member. The second connecting member 600 may function as a configuration that electrically connects the second terminal 430 and the second tab member. The second connecting member 600 may be formed of a material that can conduct electricity. The second connecting member 600 may be formed of the same material as the second terminal 430. The second connecting member 600 may include a second collector 610 and a second current collector plate 620.

The second collector 610 may be connected to the second terminal 430. The second collector 610 according to the present embodiment may include a second body 611 and a second boss 612.

The second body 611 may form one side of the outer surface of the second collector 610 and may support the second boss 612. The second body 611 according to the present embodiment may be placed between the electrode assembly 200 and the second terminal 430. The second body 611 may be spaced apart from the lower surface of the second terminal 430 by a predetermined distance in the first direction.

The second boss 612 may be extended from the second body 611 and connected to the second terminal 430. The second boss 612 according to the present embodiment may have a cylindrical shape extending from the second body 611 in the first direction.

The second current collector plate 620 according to the present embodiment may include a second center plate 621, a second inner plate 622, and a second outer plate 623.

The second center plate 621 may form the central outer surface of the second current collector plate 620 and can be connected to the second collector 610. The second center plate 621 according to the present embodiment may be placed between the second body 611 and the electrode assembly 200. The second center plate 621 may be in contact with the lower surface of the second body 611 located on the opposite side of the second boss 612. The second center plate 621 may be fixed to the lower surface of the second body 611 by various types of joining methods such as welding, bolting, and bonding. The second center plate 621 may have both ends extending from the second body 611 toward the electrode assembly 200. The both ends of the second center plate 621 may penetrate the insulating plate 470 and be arranged on the lower side of the insulating plate 470.

The second inner plate 622 may be extended from the second collector 610 in the opposite direction to the second direction. The second inner plate 622 according to the present embodiment may be extended from one end of the second center plate 621 in the opposite direction to the second direction. The second inner plate 622 may be arranged to face the second inner tab member 330 along the first direction. The second inner plate 622 may come into contact with the end surface of the second inner tab member 330.

In the rechargeable battery according to the present embodiment, a plurality of protrusions are formed on the inner surface of the case, and a resin with a melting point of 150 °C or higher is included on the outer surface of the electrode assembly or between the plurality of protrusions.

In a comparable structure without a plurality of protrusions, when an internal short circuit occurs in a rechargeable battery, only a vent opening may partially delay thermal runaway. However, when the vent is opened, thermal runaway or a corresponding thermal deformation of the battery has already occurred, so the vent opening alone has limitations in preventing thermal runaway.

In contrast, according to embodiments, the plurality of protrusions are formed to protrude from the inner surface of the case into the interior of the case. Therefore, when an internal short circuit occurs in the rechargeable battery and the electrode assembly expands, the plurality of protrusions may easily come into contact with the expanded electrode assembly and thus induce an intentional short circuit. Meanwhile, since the resin has a melting point of 150 °C or higher, it may melt when an internal short circuit occurs, exposing the electrode assembly. In addition, as the resin melts, a resin-containing coating layer may be completely buried between the protrusions, and at a temperature of 200 °C or higher, the electrode assembly expands (e.g., by 30% or more) and the resin-containing coating layer completely melts, and thus the protrusions may fully come into contact with the electrode assembly. Therefore, when an internal short circuit occurs in the rechargeable battery and the internal temperature of the battery rises, the resin melts, thereby making it easier for the plurality of protrusions and the electrode assembly to come into contact, and thus an intentional short circuit may be induced. In a specific example, the case may be part of the positive electrode, and the outer surface of the electrode assembly may be part of the negative electrode.

A rechargeable battery in which only the plurality of protrusions are formed without the resin may affect normal battery operation by allowing the plurality of protrusions to easily come into contact with the electrode assembly even when there is an external impact on the rechargeable battery or a small expansion of the electrode assembly during the charging and discharging of the battery. A rechargeable battery with a resin on both the outer surface of the electrode assembly and the inner surface of the case without the plurality of protrusions may take longer to induce an intentional short circuit compared to a battery with the protrusions, thereby increasing the possibility of thermal runaway. Therefore, a rechargeable battery with both the plurality of protrusions and the resin may maximize the effect of intentionally inducing a short circuit when an internal short circuit occurs without affecting battery operation during the charging and discharging of the battery, through the interaction between the plurality of protrusions and the resin.

According to an embodiment, the resin may be a thermoplastic resin. In this case, the resin may easily melt depending on the degree of temperature rise in the battery, so that the intentional short circuit effect is easily implemented.

According to an embodiment, the resin may have a melting point of 150 °C to 200 °C. Within this melting point range, the resin may easily melt when an internal short circuit occurs in the rechargeable battery, which makes it easier for the plurality of protrusions and the electrode assembly to come into contact, thereby enhancing the intentional short circuit effect. The plurality of protrusions may enhance the intentional short circuit effect in a rechargeable battery including a resin with the above-described melting point range. According to an embodiment, the resin may include one or more of polyethylene resins including LDPE (low density polyethylene) and HDPE (high density polyethylene), polypropylene resins, and polyurethane resins.

According to an embodiment, the resin may be included on the outer surface of the electrode assembly facing the plurality of protrusions. For example, the resin may be included as a coating layer on the outer surface of the electrode assembly. Accordingly, the coating layer may block contact between the electrode assembly and the plurality of protrusions when there is no internal short circuit.

According to an embodiment, the coating layer may or may not come into contact with the plurality of protrusions. For example, the coating layer may come into contact with at least some of the protrusions, thereby allowing an intentional short circuit to quickly occur when an internal short circuit occurs.

According to an embodiment, the resin may be located between the plurality of protrusions. Therefore, it is not necessary to form a separate coating layer including a resin on the outer surface of the electrode assembly, which may improve battery capacity.

According to an embodiment, the plurality of protrusions may be formed on the inner surface of the first side and/or the second side of the case. However, a plurality of protrusions may also be formed on one or more of the bottom, front, and rear of the case.

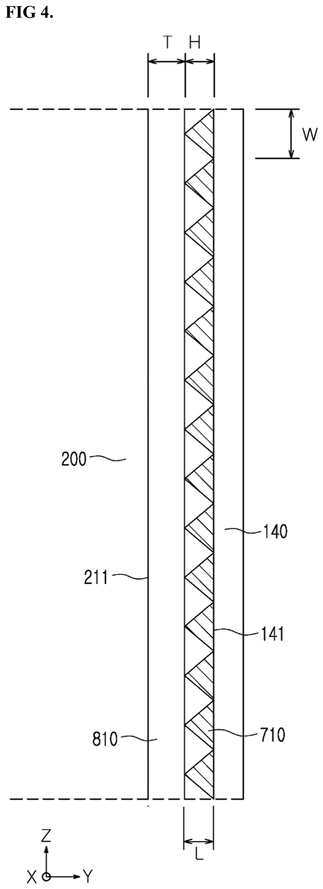

FIGS. 4 to 8 are enlarged cross-sectional views showing a portion of the electrode assembly 200 adjacent to a side of the case 100 of the rechargeable battery according to an embodiment of the present disclosure.

FIG. 4 is an enlarged cross-sectional view of the area between the first side 140 of the case 100 and the electrode assembly 200 in FIG. 3. While FIG. 4 illustrates a plurality of protrusions 710 on an inner surface of the first side 140 of the case 100, a plurality of protrusions may also be formed on the inner surface of one or more of the second side, bottom, front, and rear of the case.

Referring to FIG. 4, in the rechargeable battery, a plurality of protrusions 710 are formed on (e.g., directly on) the inner surface 141 of the first side 140 of the case, and a resin-containing coating layer 810 is formed on (e.g., directly on) the outer surface 211 of the electrode assembly 200. For example, referring to FIG. 4, the resin-containing coating layer 810 may be between (e.g., in direct contact with both) the outer surface 211 of the electrode assembly 200 and the plurality of protrusions 710. Since the plurality of protrusions 710 are formed on the inner surface 141 of the first side 140 of the case, the plurality of protrusions may directly come into contact with the electrode assembly 200 (e.g., through resin-containing coating layer 810), thereby easily inducing an intentional short circuit.

The plurality of protrusions 710 may have a cross-section that protrudes toward the electrode assembly 200. The cross-section of the protrusion 710 in the second direction (Y-axis direction in FIG. 4) may be polygonal with three (3) to ten (10) sides (N), circular, semicircular, elliptical, or an irregular shape. For example, the protrusion may have a pointed top in the second direction, thereby easily inducing an intentional short circuit. For example, the cross-section of the protrusion in the second direction may be triangular as shown in FIG. 4, or it may be a modified triangular shape with concave or convex sides, or with flat or curved sides.

The cross-section of the protrusion 710 in the first direction (Z-axis direction in FIG. 4) may be polygonal with three (3) to ten (10) sides (N), circular, semicircular, elliptical, or an irregular shape. For example, the cross-section of the protrusion 710 in the first direction may be triangular, square, or circular.

The aspect ratio of the protrusion 710 may be adjusted according to factors such as the effect of inducing intentional short circuits, the impact on the electrode assembly 200 during the charging and discharging of the battery, and the distance between the case 100 and the electrode assembly 200. For example, the aspect ratio of one protrusion 710 may be 0.1 to 3 (e.g., 2 to 3). Here, "the aspect ratio of the protrusion" refers to the ratio of the maximum height (H) of one protrusion 710 to a maximum width (W) of the one protrusion 710.

The maximum height (H) of the protrusion 710 refers to a maximum length of the protrusion 710 in the second direction (e.g., along the Y-axis direction), and may be adjusted according to the distance between the case 100 and the electrode assembly 200 and/or the thickness of the resin-containing coating layer 810. For example, the maximum height (H) of each of the protrusions 710 may be the same, such as a row of a plurality of protrusions 710 having a constant height may be formed. For example, the maximum height (H) of the protrusion 710 may be 1 µm to 10 µm, e.g., 2 µm to 6 µm. Within this range, it may be easy to induce an intentional short circuit, and the electrode assembly 200 may not be affected during the charging and discharging of the battery.

The maximum width (W) of the protrusion 710 refers to a maximum length of the protrusion 710 in the first direction (e.g., along the Z-axis direction), and may be adjusted according to the distance between the case 100 and the electrode assembly 200 and/or the thickness of the resin-containing coating layer 810. For example, the maximum width (W) of the protrusion 710 may be 1 µm to 10 µm, e.g., 2 µm to 6 µm. Within this range, it may be easy to form the protrusions 710 on the inner surface of the case 100.

Assuming the protrusions 710 are formed on the first side 140 of the case 100, when the area between the uppermost surface and the lowermost surface of the first side 140 is divided into three equal-width regions -- a first region, a second region, and a third region, the plurality of protrusions 710 may be formed at a higher density in the second region compared to the first and third regions. In this case, when an internal short circuit occurs, the expansion of the electrode assembly 200 may be quickly responded to, thereby inducing an intentional short circuit more rapidly.

The protrusions 710 may be formed without any spacing in the first direction (Z-axis direction in FIG. 4), or they may be spaced predetermined distance apart from each other. For example, the distance between the plurality of protrusions may be 0 µm to 10 µm, e.g., 0 µm to 5 µm.

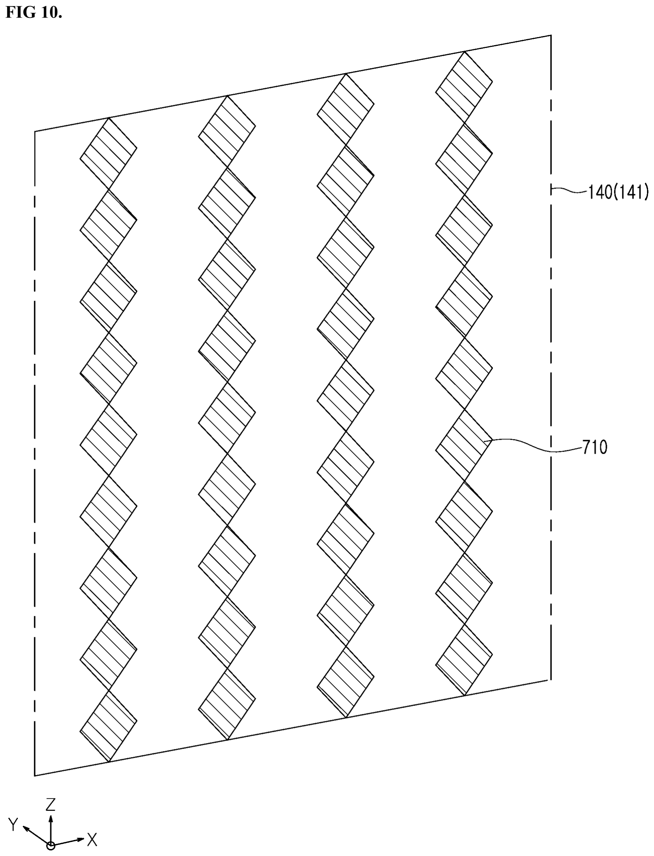

On the inner surface of the case, one or more rows of a plurality of protrusions 710 may be formed parallel to the third direction (X-axis direction in FIG. 4). For example, the rows may not be spaced apart or may be spaced apart from each other. For example, the distance between the rows may be 0 mm to 10 mm. This is described in detail in FIG. 10 below.

The resin-containing coating layer 810 may be formed directly on the outer surface 211 of the electrode assembly 200. For example, only the resin-containing coating layer 810 may be formed on the outer surface 211 of the electrode assembly 200 in its thickness direction of the electrode assembly 200.

The resin-containing coating layer 810 may be formed on the outer surface 211 of the electrode assembly 200 facing the portion of the case 100 where the plurality of protrusions 710 are formed. In other words, when the plurality of protrusions 710 are formed on the inner surface 141 of the first side 140, the resin-containing coating layer 810 may be formed on the outer surface 211 of the electrode assembly 200 facing the first side 140 of the case 100. In this case, there is no impact on battery operation during the charging and discharging of the battery, and an intentional short circuit may be easily induced when an internal short circuit occurs.

The thickness (T) of the resin-containing coating layer 810 in the second direction (e.g., along the Y-axis direction) may be less than the maximum height (H) of each of the plurality of protrusions 710. In this case, when an internal short circuit occurs, the resin in the resin-containing coating layer 810 may melt quickly, thereby rapidly inducing an intentional short circuit. For example, the ratio of the maximum height (H) of each of the plurality of protrusions 710 to the thickness (T) of the resin-containing coating layer 810 may be 1:0.2 to 1:2 (e.g., 1:0.2, 1:0.3, 1:0.4, 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2).

The thickness (T) of the resin-containing coating layer 810 may be 0.5 to 15 µm (e.g., 1 µm to 10 µm). For example, the thickness (T) of the resin-containing coating layer 810 may be constant.

The resin-containing coating layer 810 may be formed on 50% to 100%, e.g., 60% to 100%, of the total area of the outer surface 211 of the electrode assembly 200 facing the inner surface 141 of the case 100 on which the plurality of protrusions 710 are formed. Within this range, the resin-containing coating layer 810 may be maintained during the charging and discharging of the battery, and an intentional short circuit may be easily induced when an internal short circuit occurs.

The maximum height (H) of the protrusions may be 50% or more, e.g., 50% to 100%, of the gap (L) between the inner surface 141 of the first side 140 of the case 100 and the resin-containing coating layer 810. Referring to FIG. 4, the gap (L) may be measured between the inner surface 141 of the first side 140 of the case 100 and an outermost surface of the resin-containing coating layer 810 facing the inner surface 141 of the first side 140 along the second direction (e.g., the Y-axis direction).

The resin-containing coating layer 810 may be formed as a single continuous layer on the outer surface 211 of the electrode assembly 200. Here, the "continuous layer" refers to a resin-containing layer that is formed as a single layer without interruption, as shown in FIG. 4.

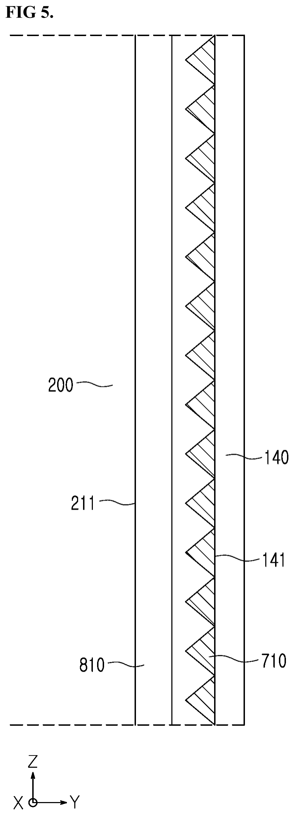

The resin-containing coating layer 810 may come into contact (e.g., direct contact) with the plurality of protrusions 710. However, the resin-containing coating layer 810 may also not come into contact with the plurality of protrusions 710, as will be described with reference to FIG. 5, below.

Referring to FIG. 5, in the rechargeable battery, the plurality of protrusions 710 are formed on the inner surface 141 of the first side 140 of the case 100, and the resin-containing coating layer 810 is formed on the outer surface 211 of the electrode assembly 200. Compared to FIG. 4, the configuration is substantially identical except that the resin-containing coating layer 810 does not come into direct contact with the plurality of protrusions 710.

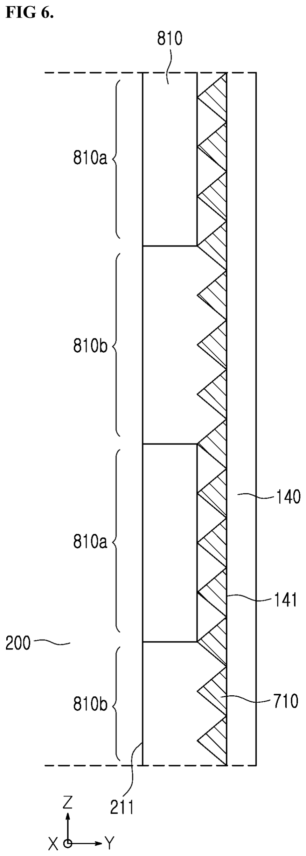

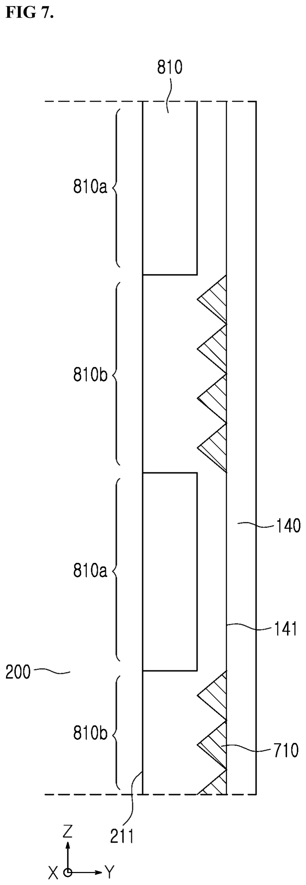

The resin-containing coating layer 810 may be formed as a discontinuous layer on the outer surface 211 of the electrode assembly 200. Here, the "discontinuous layer" means that a first region with the resin-containing coating layer and a second region without the resin-containing coating layer are alternately formed on the outer surface of the electrode assembly, as shown in FIGS. 6 and 7.

Referring to FIG. 6, in the rechargeable battery, the plurality of protrusions 710 are formed on the inner surface 141 of the first side 140 of the case 100, and the resin-containing coating layer 810 is formed on the outer surface 211 of the electrode assembly 200. As shown in FIG. 6, on the outer surface 211 of the electrode assembly 200, a first region 810a with a portion of the resin-containing coating layer and a second region 810b without a resin-containing coating layer are alternately formed, and a plurality of protrusions 710 may be formed (e.g., continuously) on the inner surface 141 of the first side 140 of the case to face the entire outer surface 211, i.e., to face both the first region 810a and the second region 810b.

Referring to FIG. 7, in the rechargeable battery, the plurality of protrusions 710 are formed on the inner surface 141 of the first side 140 of the case 100, and the resin-containing coating layer 810 is formed on the outer surface 211 of the electrode assembly 200. As shown in FIG. 7, on the outer surface 211 of the electrode assembly 200, a first region 810a with a portion of the resin-containing coating layer and a second region 810b without a resin-containing coating layer are alternately formed, and the plurality of protrusions 710 may be formed to face the second region 810b (e.g., the plurality of protrusions 710 may be formed to face only the second region 810b among the first and second regions 810a and 810b).

The resin-containing coating layer 810 may be entirely flat, as shown in FIGS. 4 to 7. When the resin-containing coating layer 810 is flat, the resin-containing coating layer 810 may be easily manufactured.

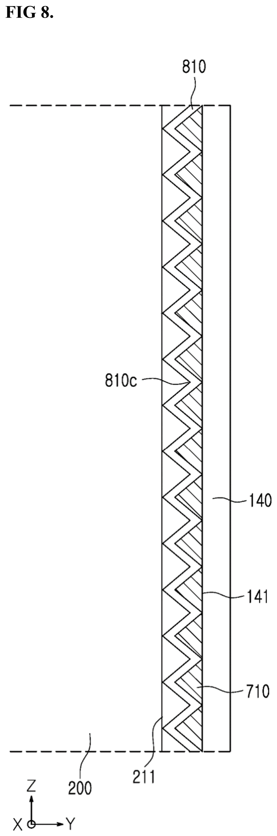

On the other hand, the resin-containing coating layer 810 may also have an uneven surface. The unevenness allows the resin-containing coating layer 810 to melt quickly when an internal short circuit occurs, and the plurality of protrusions 710 may quickly come into contact with the electrode assembly 200 in the concave portion of the uneven surface, thereby rapidly inducing an intentional short circuit, as will be described in detail with reference to FIG. 8.

Referring to FIG. 8, in the rechargeable battery, the plurality of protrusions 710 are formed on the inner surface 141 of the first side 140 of the case 100, and the resin-containing coating layer 810 is formed on the outer surface 211 of the electrode assembly 200. As illustrated in FIG. 8, the resin-containing coating layer 810 may have alternating convex portions 810c. The uppermost part of the protrusions 710 may be positioned to correspond to (e.g., be aligned with or fit into) the spaces between the convex portions 810c, and thus an intentional short circuit may be rapidly induced when an internal short circuit occurs.

For example, referring to FIG. 8, the cross-section of the convex portion 810c may be triangular. In another example, the cross-section of the convex portion may be semicircular, semi-elliptical, or polygonal. For example, the cross-section of the convex portion 810c may be complementary with respect to the cross-section of the protrusion 710.

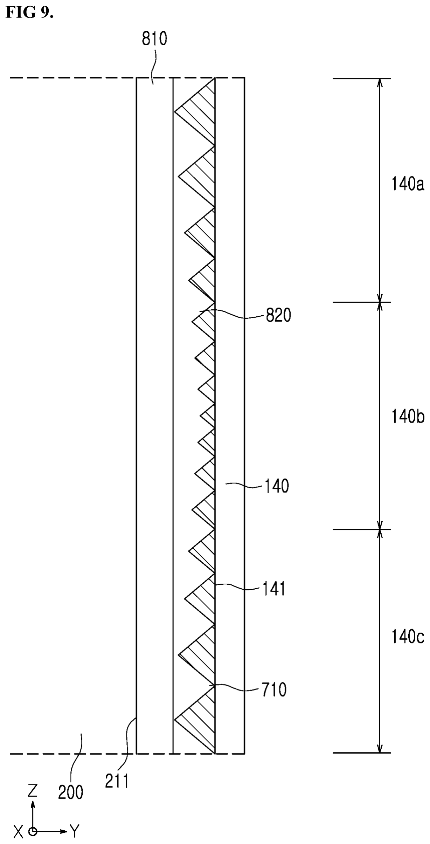

For example, the maximum heights of the plurality of protrusions 710 may be the same. In another example, the maximum heights of the plurality of protrusions may be different, as will be described in detail with reference to FIG. 9.

Referring to FIG. 9, in the rechargeable battery, the plurality of protrusions 710 are formed on the inner surface 141 of the first side 140 of the case 100, and the resin-containing coating layer 810 is formed on the outer surface 211 of the electrode assembly 200. As illustrated in FIG. 9, the maximum height of the plurality of protrusions 710 may gradually decrease and then gradually increase.

For example, as illustrated in FIG. 9, when the inner surface of the first side 140 of the case is divided into three regions from its first end to the opposing second end -- a first region 140a, a second region 140b, and a third region 140c, the maximum height of the plurality of protrusions 710 may gradually decrease from the first region 140a to the second region 140b, and then gradually increase from the second region 140b to the third region 140c. For example, when an internal short circuit occurs in the battery, since the part of the electrode assembly 200 corresponding to the second region 140b has a substantially high degree of expansion, the intentional short circuit may easily occur even though the maximum height of the protrusions in the second region 140b is lower than the maximum heights of the protrusions in the first region 140a and the third region 140c.

FIG. 10 is a partial plan view showing the inner surface 141 of the first side 140 of the case 100 of a rechargeable battery according to another embodiment of the present disclosure.

Referring to FIG. 10, one or more parallel rows of protrusions 710 may be formed along the third direction (X-axis direction in FIG. 10) on the inner surface 141 of the first side 140 of the case. For example, the rows may not be spaced apart or may be spaced apart from each other. For example, the distance between the rows may be 0 mm to 10 mm.

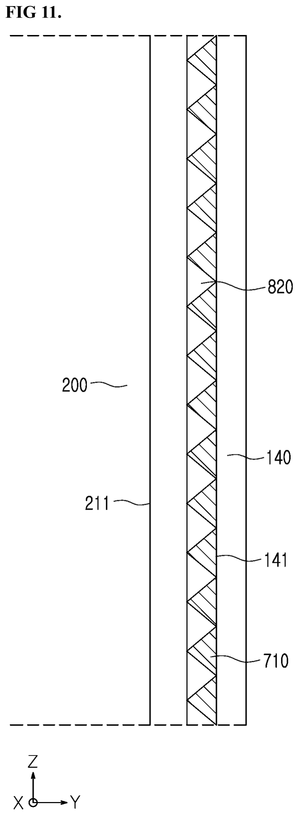

FIG. 11 is an enlarged cross-sectional view of the area between the electrode assembly 200 and the first side 140 of the case 100 of a rechargeable battery according to still another embodiment of the present disclosure.

Referring to FIG. 11, in the rechargeable battery, the plurality of protrusions 710 are formed on the inner surface 141 of the first side 140 of the case, and a resin 820 may be positioned between the plurality of protrusions 710 (e.g., the resin 820 may completely fill regions between adjacent ones of the plurality of protrusions 710). In this case, the resin 820 may be spaced apart from the outer surface 211 of the electrode assembly 200 and a distance between the resin 820 and the outer surface 211 may be adjusted and/or optimized (e.g., an empty space may or may not be defined between the outer surface 211 of the electrode assembly 200 and the resin 820 with the protrusions 710). Therefore, it is not necessary to form a separate resin-containing coating layer on the outer surface of the electrode assembly, which may improve battery capacity.

By way of summation and review, embodiments of the present disclosure provide a rechargeable battery that can intentionally induce a short circuit when an internal short circuit occurs, and a battery pack including the same. Embodiments of the present disclosure also provide a rechargeable battery that does not affect battery operation during the charging and discharging of the battery, and a battery pack including the same. According to embodiments of the present disclosure, the effect of forcibly inducing a short circuit when an internal short occurs can be maximized without affecting the operation of the battery during charging and discharging through the interaction between a plurality of protrusions and the resin.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery, comprising:
a case;
an electrode assembly in the case;
protrusions on an inner surface of the case; and
a resin between an outer surface of the electrode assembly and the protrusions, the resin having a melting point of 150 °C or higher.

2. The battery as claimed in claim 1, wherein the resin has a melting point of 150 °C to 200 °C.

3. The battery as claimed in claim 1 or claim 2, wherein the resin is a thermoplastic resin.

4. The battery as claimed in any one of claims 1 to 3, wherein the resin includes one or more of a polyethylene resin, a polypropylene resin, and a polyurethane resin.

5. The battery as claimed in any one of claims 1 to 4, wherein the resin is on the outer surface of the electrode assembly and facing the protrusions.

6. The battery as claimed in claim 5, wherein the resin is a coating layer on the outer surface of the electrode assembly, optionally wherein the coating layer is on 50% to 100% of a total area of the outer surface of the electrode assembly facing the inner surface of the case including the protrusions.

7. The battery as claimed in claim 6, wherein a ratio of a maximum height of each of the protrusions to a thickness of the coating layer is 1:0.2 to 1:2, optionally wherein the thickness of the coating layer is 1 µm to 10 µm, and the maximum height of each of the protrusions is 1 µm to 10 µm.

8. The battery as claimed in claim 6 or claim 7, wherein a maximum height of each of the protrusions is 50% or more of a gap between the inner surface of the case and the coating layer.

9. The battery as claimed in any one of claims 6 to 8, wherein the coating layer is a continuous single layer on the outer surface of the electrode assembly.

10. The battery as claimed in any one of claims 6 to 8, wherein the coating layer includes a first region with the resin and a second region without the resin, the first region and the second region alternating on the outer surface of the electrode assembly.

11. The battery as claimed in claim 10, wherein the protrusions are on the inner surface of the case to face only the second region.

12. The battery as claimed in any one of claims 6 to 10, wherein the coating layer is in contact with the protrusions.

13. The battery as claimed in any one of claims 6 to 12, wherein:
(i) the coating layer is flat; or
(ii) the resin coating layer has an uneven surface with convex portions, the protrusions corresponding to concave portions between the convex portions.

14. The battery as claimed in any one of claims 1 to 13, wherein:
(i) each of the protrusions has a pointed top, optionally wherein an aspect ratio of each of the protrusions is 0.1 to 3; and/or
(ii) a distance between the protrusions is 0 µm to 10 µm.

15. A battery pack, comprising:
a housing; and
a plurality of rechargeable batteries in the housing, each of the plurality of rechargeable batteries including:
a case,
an electrode assembly in the case,
protrusions on an inner surface of the case, and
a resin between an outer surface of the electrode assembly and the protrusions, the resin having a melting point of 150 °C or higher.
